# EUROPEAN PATENT APPLICATION

(11) **EP 1 719 414 A1**
(43) Date of publication of application: **08.11.2006**
(21) Application number: 06113296.5
(22) Date of filing: 28.04.2006
(51) Int. Cl.: A23L 1/01, A21B 3/04, A23L 1/27

(54) **Method for cooking meat using steam**

(30) Priority: 03.05.2005 US 120406
(71) Applicant: WHIRLPOOL CORPORATION, Benton Harbor Michigan 49022 (US)
(72) Inventor: Sells, Joel M., 21025, Comerio (IT); Embury, Karen M., 21025, Comerio (IT); Reay, Malcolm, 21025, Comerio (IT)
(74) Representative: Guerci, Alessandro

(57) **Abstract**

A method of cooking meat using steam in an automated household oven comprises a browning step where the cooking cavity is heated at a first temperature sufficient to brown the meat and a cooking step where the cooking cavity is heated at a second temperature sufficient to cook the meat. Steam is introduced into the cavity during the cooking step to facilitate cooking the meat.

## Description

### BACKGROUND OF THE INVENTION

### Field of the Invention

The invention relates to a method for cooking meat in an automated household oven using steam.

### Description of the Related Art

Meats, such as beef, poultry, and pork, can be cooked in a variety of ways. One common method of cooking meat involves browning the outside surface of the meat. During the browning process, also known as the Maillard reaction, reducing sugars and amino acids react at temperatures usually in the range of 150-260 °C (300-500 °F) and break down relatively large, dull tasting molecules into relatively small, volatile molecules having a pleasing taste and odor. Thus, the browning process gives the meat a desired flavor in addition to changing the color of the surface of the meat. Browning occurs only at the surface because the moisture in the meat prevents the interior from reaching temperatures required for the Maillard reactions to take place. Many recipes call for browning the meat at a high temperature, such as by placing the meat in a pan on a cooktop, prior to cooking the interior of the meat, such as by placing the meat in an oven, at a lower temperature. The relatively low temperature of the cooking step might not be sufficient to brown the meat, and exposing the meat to the high temperature ensures that the meat browns and thereby will have a desired flavor and color. However, this two-step process can be time consuming and is inconvenient as it requires attention of the cook while the meat is browning on the cooktop.

The separate browning step can be used prior to cooking meat in a steam environment. The benefits of cooking food, including meats, with steam are widely recognized, and some higher end contemporary household ovens incorporate an automated steam generating system that introduces steam into the cooking cavity of the oven. Benefits of cooking with steam include accelerating the cooking process, moisturizing the meat during the cooking process to keep the meat tender, and preserving vitamins and nutrients in the food. The browning Maillard reaction, however, cannot occur at the surface of the meat in a humid cooking cavity. As a result, the user must brown the meat as described above to achieve the desired taste and texture.

### SUMMARY OF THE INVENTION

A method of cooking meat using steam according to one embodiment of the invention during a cooking cycle in an automated household oven with a cooking cavity, a heating system for heating the cooking cavity, and a steam system for introducing steam into the cooking cavity comprises a browning phase where the cooking cavity is heated at a first temperature sufficient to brown the meat, a cooking phase where the cooking cavity is heated at a second temperature sufficient to cook the meat, and introducing steam into the cooking cavity during the cooking phase.

The second temperature can be lower than the first temperature.
The browning phase can include no introduction of steam. The introducing of the steam can comprise generating steam prior to the end of the browning phase.

The browning phase can comprise a first preheating step where the cooking cavity is rapidly heated at a first preheating rate to a third temperature. The third temperature can be about 200 °C (400 °F). Rapidly heating can comprise operating the heating system at substantially full capacity. The cooking cavity can be heated to the third temperature in about 6 minutes during the first preheating step.

The browning phase can further comprise a second preheating step after the first preheating step where the cooking cavity is heated from the third temperature to the first temperature at a second preheating rate. The second preheating rate can be less than the first preheating rate. The cooking cavity can heated to the first temperature from the third temperature in about 4 minutes during the second preheating step. The first temperature can be about 230 °C (450 °F).

The first and second preheating steps can include no introduction of steam. The meat can be located in the cooking cavity during the first and second preheating steps.

The method can further comprising running a convection fan to circulate the heated air in the cooking cavity.

The second temperature can be user selected.

The browning phase can comprise holding the cooking cavity at the first temperature for a predetermined period of time. The browning phase can further comprise providing sufficient top heat to effect the browning of the meat

The introducing of the steam can comprise maintaining a relative humidity in the cooking cavity until the end of the cooking cycle. The cooking phase can comprise maintaining the cooking cavity at the second temperature until the end of the cooking cycle.

### BRIEF DESCRIPTION OF THE DRAWINGS

In the drawings:

Fig. 1 is a perspective view of an exemplary automatic household oven.

Fig. 2 is a schematic view of the oven of Fig. 1.

Fig. 3 is a schematic diagram illustrating a controller of the oven of the Fig. 1 and exemplary components in operative communication with the controller for executing a method of cooking meat with steam according to one embodiment of the invention.

Fig. 4 is a schematic diagram illustrating a method of cooking meat with steam according to one embodiment of the invention.

Fig. 5 is a schematic graph illustrating a temperature and a relative humidity in a cooking cavity of the oven of Fig. 1 during the execution of the method of cooking meat with steam shown in Fig. 4.

Fig. 6 is a table of exemplary parameters for implementation of the method of cooking meat shown in Figs. 4 and 5.

### DESCRIPTION OF THE PREFERRED EMBODIMENT

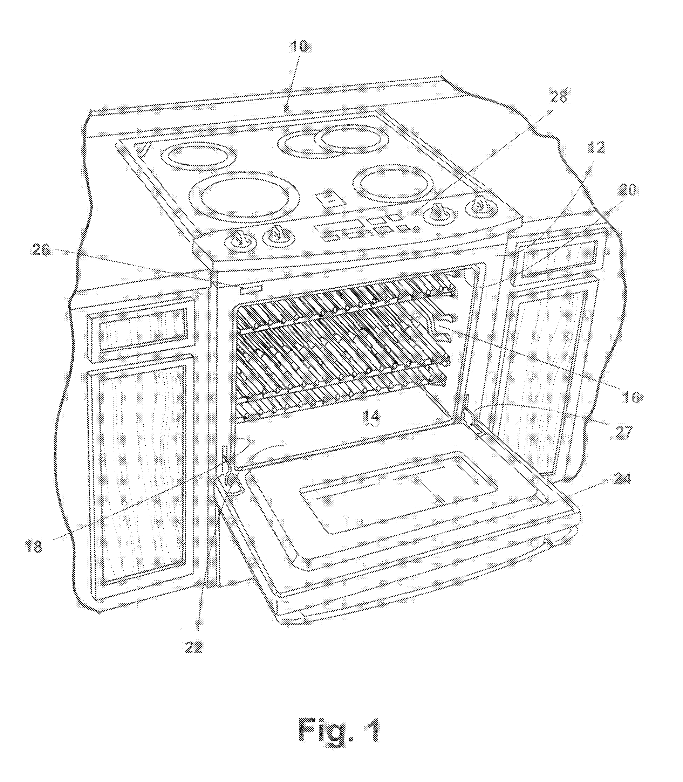

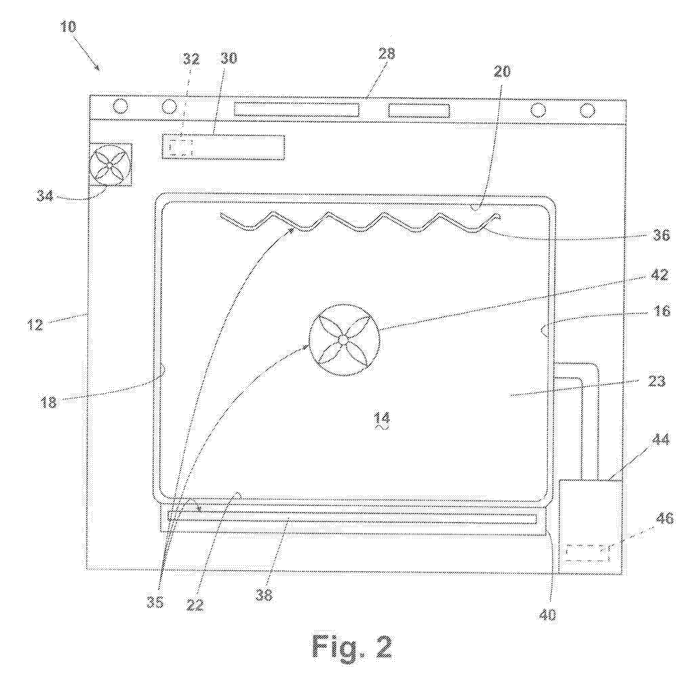

Referring now to the figures, Fig. 1 illustrates an exemplary automatic household oven 10 that can be used to implement a method for cooking meat with steam according to one embodiment of the invention. The oven 10 comprises a cabinet 12 with an open-face cooking cavity 14 defined by cooking cavity walls: a pair of spaced side walls 16, 18 joined by a top wall 20, a bottom wall 22, and a rear wall 23 (Fig. 2). A door 24 pivotable at a hinge 27 selectively closes the cavity 14, and a sensor 26 detects an open position of the door 24 and a closed position of the door 24. When the door 24 is in the open position, a user can access the cavity 14, while the door 24 in the closed position prevents access to the cavity 14 and seals the cavity 14 from the external environment.

The oven 10 further comprises a control panel 28 with a user interface accessible to the user for inputting desired cooking parameters, such as temperature and time, of manual cooking programs or for selecting automated cooking programs. The user interface can comprise, for example, a button, a touch pad, a touch screen, or a voice command unit. The control panel 28 communicates with a controller 30 located in the cabinet 12, as shown in Fig. 2. The controller 30 can be a proportional-integral-derivative (PID) controller or any other suitable controller, as is well-known in the automatic oven art. The controller 30 stores data, such as default cooking parameters, the manually input cooking parameters, and the automated cooking programs, receives input from the control panel 28, and sends output to the control panel 28 for displaying a status of the oven 10 or otherwise communicating with the user. Additionally, the controller 30 includes a timer 32 for tracking time during the manual and automated cooking programs and a cooling fan 34 located in the cabinet 12 for drawing cooling air into the cabinet 12 and directing the air toward the controller 30 to avoid overheating of the controller 30 by heat conducted from the cavity 14. The cooling air flows around the outside of the cooking cavity walls 16, 18, 20, 22, 23.

With continued reference to Fig. 2, the oven 10 further comprises a heating system 35 having an upper heating element 36, commonly referred to as a broiler, and a lower heating element 38. The schematic illustration of the Fig. 2 shows the lower heating element 38 as being hidden or mounted beneath the cooking cavity bottom wall 22 in a heating element housing 40. Heat from the lower heating element 3 8 conducts through the bottom wall 22 and into the cavity 14. Alternatively, the lower heating element 38 can be mounted inside the cavity 14, as is well-known in the oven art. Further, the upper and lower heating elements 36, 38 can be mounted at the side walls 16, 18 of the cavity 14, as disclosed in U.S. Patent No. 6,545,251 to Allera et al., During use, the upper heating element 36 creates top heat, or heat emanating from the upper heating element 36 to an upper portion of the cavity 14, and the lower heating element 38 creates bottom heat, or heat emanating from the lower heating element 38 to a lower portion of the cavity 14. The heating system 35 according to the illustrated embodiment further comprises a convection fan 42 that circulates air and steam, when present, within the cavity 14. The convection fan 42 can be any suitable fan and can be mounted in any suitable location of the cavity 14, such as in the rear wall 23.

In addition to the heating system, the oven 10 comprises a steam system 44 preferably mounted within the cabinet 12 and configured to introduce steam into the cavity 14. The steam system 44 in the illustrated embodiment comprises a boiler 46 that heats water stored in the steam system 44. However, the steam system 44 can be any suitable system that is capable of introducing steam directly into the cavity 14 or introducing water that is turned into steam in the cavity 14 and is not limited to the system shown schematically in Fig. 2.

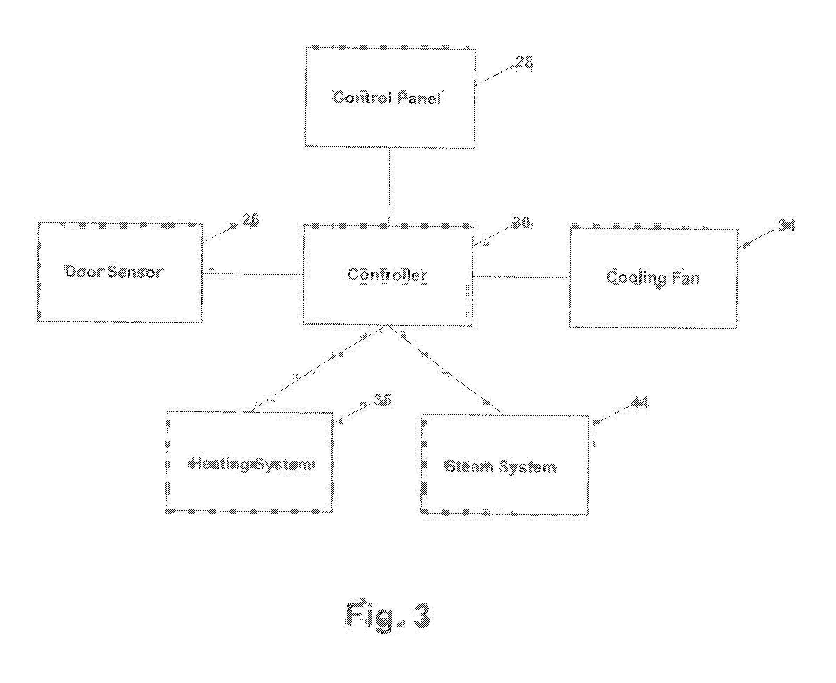

Fig. 3 is a block diagram that schematically illustrates a control system of the oven 10. The control system comprises the controller 30, which operably communicates with the control panel 28, as described above, the door sensor 26, the cooling fan 34, the heating system 35, and the steam system 44. The door sensor 26 communicates to the controller 30 the open or closed position of the door 24, and the controller 30 communicates with the cooling fan 34 to activate or deactivate the cooling fan 34 to control the temperature of the controller 30. The controller 30 instructs the heating system 35 to activate or deactivate the upper heating element 36, the lower heating element 38, and the convection fan 42, either all together, individually, or in groups, and provides instructions regarding the desired temperature of the cavity 14 and the rate at which the heating system 35 heats the cavity 14. Similarly, the controller 30 instructs the steam system 44 to activate or deactivate the boiler 46 and provides instructions regarding the desired temperature of the water in the steam system 44 in order to achieve the desired relative humidity in the cavity 14.

As stated above, the exemplary oven 10 can be used to implement a method 50 of cooking meat with steam according to one embodiment of the invention. The method 50 comprises several stages during which the heating system 35 operates to control a temperature of the cavity 14 and the steam system 44 operates to control a relative humidity of the cavity 14. The temperature and the relative humidity during the stages are selected to produce a meat item having a browned outer surface to achieve a desired outer texture, color, and taste and having a preferred doneness (i.e., rare, medium rare, medium, medium well, and well done) to achieve a desired inner texture, color, and taste. As used herein, the term "meat" refers to any type of animal flesh used for food. Examples of meats include, but are not limited to, beef; veal; pork; poultry, including fowls, such as chickens, turkeys, pheasants, ducks, or geese; venison; lamb; and mutton.

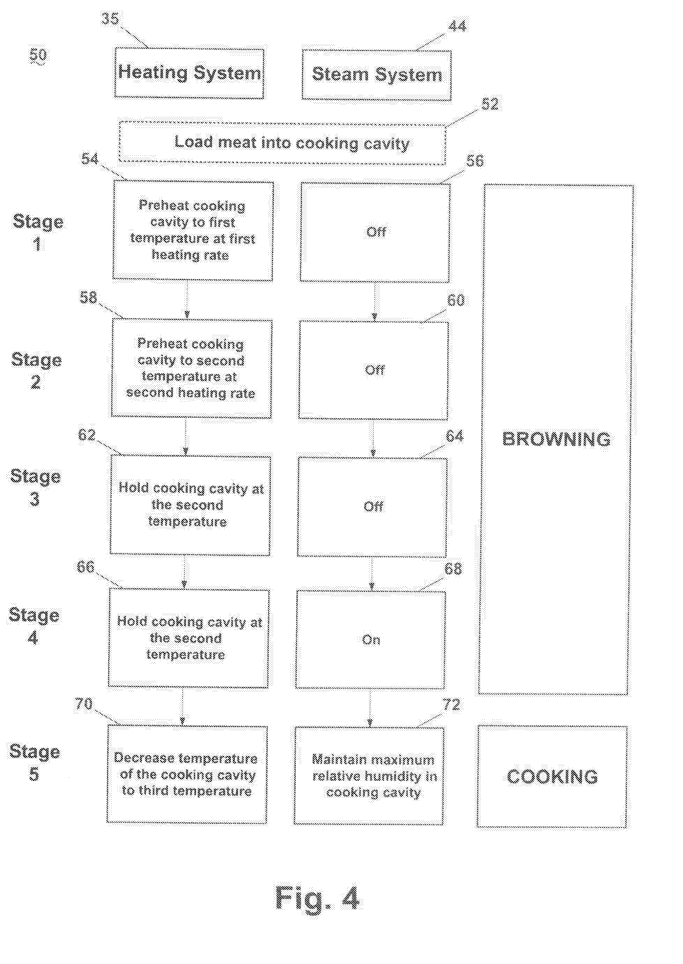

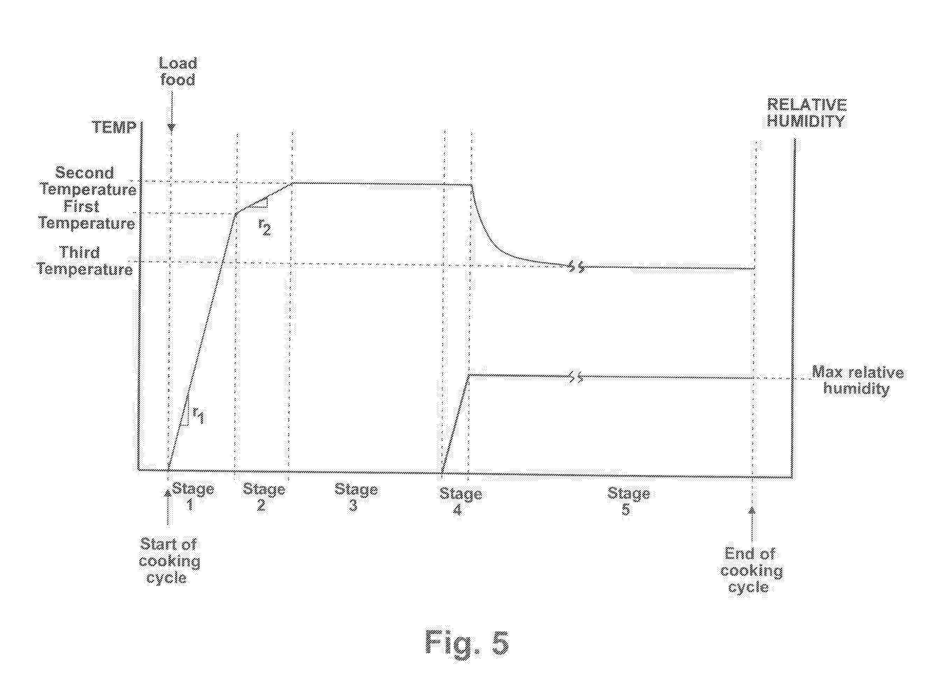

The stages of the method 50 according to one embodiment of the invention are shown in a flow chart in Fig. 4, which presents the functions of the heating system 35 and the steam system 44 during each stage of the method 50, and the corresponding temperature of the cavity 14 and the relative humidity of the cavity 14 for the stages are schematically illustrated in Fig. 5. Fig. 5 is not intended to report actual behavior of the temperature and the relative humidity during the method 50; rather, Fig. 5 represents a general behavior of these properties. It will be apparent to one of ordinary skill in the oven art that, in reality, the actual temperature and the actual relative humidity fluctuate about a target temperature, while holding a temperature and while increasing the temperature, and a target relative humidity during the operation of an oven.

Before the first stage of the method 50, the user prepares the meat by trimming, seasoning, etc., if desired, and places the meat and a corresponding meat support, such as a cooking tray, if used, into the cavity 14, as indicated by step 52 in Fig. 4. As indicated in Fig. 4, the method 50 can be characterized as having two phases: a browning phase for browning the outer surface of the meat and a cooking phase to cook the inside of the meat to a desired doneness. In general, the browning phase comprises stages 1-4, and the cooking phase comprises stage 5; however, the heat in the cavity 14 during the browning phase can also cook the meat, and the Maillard reaction responsible for browning can occur during the cooking phase if the temperature in the cavity 14 is sufficiently high. The phases are termed "browning" and "cooking" because these are the primary processes occurring during the respective phases of the method 50.

Stage 1 can be referred to as a first preheating stage where the heating system 35 rapidly heats the cavity 14 to a first temperature at a first preheating rate r₁ (step 54), and the steam system 44 is off or not activated (step 56) so that the cavity 14 is relatively dry. According to one embodiment of the invention, the first temperature is a temperature slightly less than a browning temperature, which can be input by the user through the control panel 26 or pre-programmed into the controller 30 as part of an automatic cooking cycle. The first heating rate is relatively high so that the cavity 14 quickly reaches the first temperature. During rapid heating, the heating system 35 is at substantially full capacity and heats the heating the cavity 14 as fast as possible or at a rate to minimize the time required for the cavity 14 to reach the first temperature. Stage 1 terminates when the cavity 14 reaches the first temperature or after a predetermined period of time.

Stage 2 follows stage 1 can be referred to as a second preheating stage where the heating system heats the cavity 14 to a second temperature greater than the first temperature at a second preheating rate r₂ less than the first preheating rate (step 58). During stage 2, the steam system remains off (step 60) so that the cavity 14 remains relatively dry. According to one embodiment of the invention, the second temperature is the browning temperature, which is a temperature required to achieve a desired outer color, texture, and taste. The browning temperature must be sufficiently high to support the Maillard reaction at the surface of the meat. The second preheating rate is relatively low to ensure that the cavity 14 is at the second temperature at the end of stage 2. When the cavity 14 is rapidly heated, as in the stage 1, the heating system 35 can cause the temperature in the cavity to overshoot a target temperature. By heating the cavity 14 slowly, the cavity 14 gradually approaches the second temperature rather than exceeding the second temperature, which could occur as a result of a high preheating rate. The relatively low heating rate also contributes to uniformly heating the cavity 14 to the second temperature by the end of stage 2. The term "uniformly heated" refers to all spaces in the cavity 14, the walls 16, 18, 20, 22, 23 of the cavity 14, and items, such as cooking trays, in the cavity 14 achieving the desired temperature. A uniformly heated cavity results in a higher quality meat item with consistent browning characteristics. Stage 2 terminates when the cavity 14 reaches the second temperature or after a predetermined period of time.

During stage 3, which follows stage 2, the heating system 35 maintains the cavity 14 at the second temperature (step 62) for a predetermined period of time to brown the meat. As in the preceding stages, the steam system 44 remains off (step 64) so that the cavity is relatively dry. For optimal browning, the cavity 14 is preferably hot and dry, and the heating system 35 can be operated so as to provide desired relative amounts of top heat and bottom heat to achieve a desired browning. For example, the heating system 35 can be adjusted to provide more top heat than bottom heat. While the surface of the meat can begin to brown during the first and second preheating stages (stages 1 and 2) when the temperature of the cavity 14 reaches a minimum browning temperature, the browning process predominantly occurs during the stage 3. The predetermined period of time for the stage 3 can be input by a user through the control panel 28 or can be preprogrammed into the controller 30 as part of an automatic cooking cycle. The duration of the stage 3 can depend on the type of meat and the size (surface area and weight) of the meat.

When the predetermined period of time ends, stage 4 begins. During stage 4, the heating system continues to maintain the cavity 14 at the second temperature (step 66), while the steam system 44 activates (step 68). If the steam system 44 comprises a boiler type steam system as described above, the activation of the steam system 44 comprises preheating the water in the steam system 44 so that a desired relatively humidity, such as a maximum relative humidity for a given oven, in the cavity 14 can be achieved at the beginning of stage 5. During the preheating of the water, some steam can be introduced into the cavity 14 and thereby raise the relative humidity of the cavity 14 or prehumidify the cavity 14. Alternatively, the steam system 44 can be configured so that no steam is introduced in the cavity during stage 4. Stage 4 can last for a predetermined period of time or can end when the steam system 44 is at a state capable of maintaining the relative humidity of the cavity 14 at the desired relative humidity at the beginning of the next stage.

Stage 4 essentially extends the browning phase and prepares the steam system 44 for introducing steam during the cooking phase. If the oven 10 comprises a steam system that instantaneously produces steam, such as by introducing water into the cavity 14, where the water is turned into steam, then stage 4 can be omitted. The browning phase has been described as comprising stages 1-4, but the browning phase is not limited to including all of stages 1-4 and can include more stages. During the browning phase, the primary objective is to brown the meat, and the browning process predominantly occurs during stage 3 when the temperature of the cavity 14 is held at the first temperature.

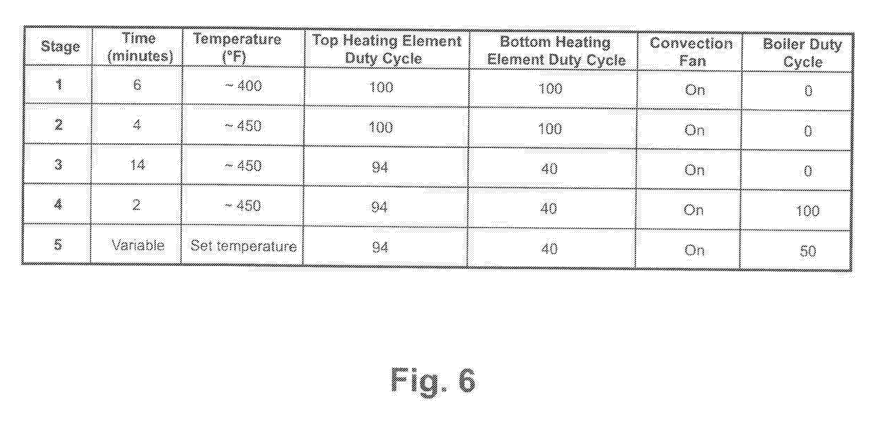

The cooking phase of the method 50 commences at stage 5, where the heating system 35 decreases the temperature of the cooking cavity 14 to a third temperature (step 70), and the steam system 44 maintains the relative humidity of the cavity 14 at the desired relative humidity, such as the maximum relative humidity (step 72). According to one embodiment of the invention, the third temperature is a cooking temperature, which can be a temperature entered by a user through a user interface on the control panel 28 or set by the automatic cooking program and is preferably less than the second temperature. The cooking temperature is the temperature of the cooking cavity 14 corresponding to cooking the meat to the desired doneness. The steam in the cooking cavity 14 facilitates the cooking process and helps to keep the meat moist rather than dry, which can occur if the meat is cooked in a dry cavity for an extended period of time. The steam also helps to cook the meat at a relatively quick rate as compared to cooking the meat without the assistance of steam. Preferably, the temperature is maintained at the third temperature and the relative humidity is maintained at the desired relative humidity until the end of the stage 5 and thereby the end of the cooking cycle. The duration of the stage 5 can be set by an automatic program according to the desired doneness of the meat, can be input by a user through the control panel 28 according to the desired doneness of the meat, or can depend directly on the doneness of the meat, such as indicated by a temperature probe that measures the internal temperature and, therefore, doneness of the meat. According to one embodiment of the invention, the duration of stage 5 is equal to a user input time less a combined duration of stages 1-4. At the end of stage 5, the meat is cooked to the desired doneness and is browned to achieve the desired outer texture, color, and taste. Because the browning phase occurs prior to the cooking phase, the meat is sufficiently browned prior to the cooking, and the doneness of the meat is independent of the exterior color. Alternatively, browning the meat after cooking the meat can undesirably result in overcooking the meat because the internal temperature of the meat remains high after the meat achieves the desired doneness at the end of the cooking cycle, and the meat continues to cook during the subsequent browning cycle.
An exemplary implementation of the method 50 with the oven 10 described above, along with exemplary operational parameter values, is presented below, with it being understood that the method 50 can be utilized with any suitable household oven 10 and that the implementation of the method 50 with different ovens can differ according to the oven utilized. The exemplary operational parameter values are shown in a table in Fig. 6.

During stage 1, the heating system 35 heats the cavity 14 to about 50 °F below the browning temperature, which is about 230 °C (450 °F); thus, the first temperature is about 200 °C (400 °F). The duration of stage 1 is about 6 minutes, and the cavity 14 can reach the 30°C (50 °F) below the browning temperature before the end of the 6 minutes and at least by the end of the 6 minutes. If the cavity 14 reaches the 200 °C (400 °F) at the end of the 6 minutes, the first preheating rate averages to about 37 °C (66.7 °F) per minute. The controller 30 instructs the heating system 35 to operate both the upper and lower heating elements 36, 38 at a 100% duty cycle and to activate the convection fan 42. An exemplary duty cycle is the percentage of time the heating element is on (i.e., power is supplied to the heating element) during a certain time interval, such as 1 minute.

After the 6 minutes, stage 2 begins, and the controller 30 instructs the heating system 35 to continue to operate the upper and lower heating elements 36, 38 at a 100% duty cycle to preheat the cavity 14 to the browning temperature, about 230 °C (450 °F). Stage 2 has a duration of about 4 minutes, and the cavity 14 can reach the 230 °C (450 °F) before the end of the 4 minutes and at least by the end of the 4 minutes. If the cavity 14 reaches the 230 °C (450 °F) at the end of the 4 minutes, the first preheating rate averages to about 7 °C (12.5 °F) per minute. By the end of stage 2, the cavity 14 is uniformly heated to about 230 °C (450 °F).

During stage 3, which begins at the end of stage 2, the temperature of the cavity 14 is maintained at 230 °C (450 °F). To maintain the temperature, the duty cycles of the upper and lower heating elements 36, 38 are reduced to about 94% and about 40%, respectively, to effect uniform browning of the meat. Uniform browning is obtained when the top heat and the bottom heat are in equilibrium so that the entire surface area of the meat is exposed to the same intensity of heat. An exemplary duration for the stage 3 is about 14 minutes.

The operation of the heating system 35 for stage 4 is the same as for stage 3 as the heating system 35 maintains the temperature of the cavity 14 at 230 °C (450 °F). The steam system 44 is activated to preheat the water in the steam system 44 by the boiler 46. The steam system 44 communicates with the controller 30 and turns on the boiler 46 for operation at a 100% duty cycle. As with the heating elements 36, 38, an exemplary duty cycle for the boiler 46 is the percentage of time the boiler 46 is on (i.e., power is supplied to the boiler 46) during a certain time interval, such as 1 minute. As stated above, steam generated during the stage 4 can enter the cavity 14 to prehumidify the cavity 14. However, because the temperature is relative high at 230 °C (450 °F), any steam introduced into the cavity 14 has a minimal effect on the meat. Stage 4 is relatively short, with a duration of about 2 minutes.

Following the 2 minutes of stage 4, the controller initiates stage 5, and the heating system decreases the temperature of the cavity 14 to the cooking temperature, which is the temperature set by the user according to the exemplary parameters in Fig. 6, while maintaining the duty cycles of the upper and lower heating elements 36, 38 at about 94% and about 40%, respectively. An exemplary set temperature is about 163 °C (325 °F). Further, the duty cycle of the boiler 46 is reduced to about 50%, which is a level sufficient to make enough steam to replace steam lost through vents or other means and maintain the desired relative humidity for the duration of stage 5. According to the exemplary parameters, the duration of stage 5 is variable and depends on the user input cooking cycle time. For example, the duration of stage 5 can equal the user input cooking cycle time less the combined durations of stages 1-4, which, in this example, is about 26 minutes.

As mentioned above, the operational parameter values shown in Fig. 6 are dependent on the oven 10 utilized to implement the method. Different ovens have different types of heating systems (e.g., some ovens do not have the convection fan 42) and steam systems, which affect the implementation of the method 50. For example, the above operational parameter values were determined with the cooling fan 34 operational during the entire cooking cycle. Because the cooling fan 34 can draw away heat from the cooking cavity 14 through the cooking cavity walls 16, 18, 20, 22, 23, the cooling fan 34 can affect the temperature of the cavity 14.

When the user desires to cook meat using the method 50, the user prepares the meat, places the meat along with a meat support, if used, in the cavity 14, and closes the door 24. Next, the user selects a "MEAT" cooking cycle on the oven 10 through the control panel 28. The user also enters the set temperature and the cooking cycle time, if needed, through the control panel 28. The oven 10 then implements the method 50, beginning at stage 1 and ending at stage 5. Following stage 5, the user removes the meat, which is brown and is cooked to the desired doneness, from the cavity 14. As a result of the method 50, the meat is browned at a high temperature and then cooked in a controlled steam environment, and the user does not have to perform a separate browning step, such as by placing the meat in a pan on the cooktop.

## Claims

1. A method of cooking meat using steam during a cooking cycle in an automated household oven with a cooking cavity (14), a heating system (35) for heating the cooking cavity, and a steam system (44) for introducing steam into the cooking cavity, the method comprising:
a browning phase where the cooking cavity (14) is heated at a first temperature sufficient to brown the meat;
a cooking phase where the cooking cavity (14) is heated at a second temperature sufficient to cook the meat; and
introducing steam into the cooking cavity during the cooking phase.

2. The method according to claim 1, wherein the second temperature is lower than the first temperature.

3. The method according to claim 1, wherein the browning phase includes no introduction of steam.

4. The method according to claim 1, wherein the introducing of the steam comprises generating steam prior to the end of the browning phase.

5. The method according to claim 1, wherein the browning phase comprises a first preheating step where the cooking cavity (14) is rapidly heated at a first preheating rate to a third temperature.

6. The method according to claim 5, wherein the third temperature is about 200 °C (400 °F).

7. The method according to claim 6, wherein the cooking cavity (14) is heated to the third temperature in about 6 minutes during the first preheating step.

8. The method according to claim 5, wherein the browning phase further comprises a second preheating step after the first preheating step where the cooking cavity is heated from the third temperature to the first temperature at a second preheating rate.

9. The method according to claim 8, wherein the second preheating rate is less than the first preheating rate.

10. The method according to claim 9, wherein the cooking cavity is heated to the first temperature from the third temperature in about 4 minutes during the second preheating step.

11. The method according to claim 10, wherein the first temperature is about 230 °C (450 °F).

12. The method according to claim 8, wherein the first and second preheating steps include no introduction of steam.
